# EUROPEAN PATENT APPLICATION

(11) **EP 2 133 196 A1**
(43) Date of publication of application: **16.12.2009**
(21) Application number: 08158234.8
(22) Date of filing: 13.06.2008
(51) Int. Cl.: B32B 3/10, B32B 27/10, B65D 33/04, B32B 38/10

(54) **Barrier packaging material with discontinuous window in full paper surface**

(71) Applicant: Drukkerij Zwart B.V., 3812 RT Amersfoort (NL)
(72) Inventor: Schraa, Ronald, 8225 AV, Lelystad (NL)
(74) Representative: Hatzmann, Martin

(57) **Abstract**

The invention is directed to a barrier packaging material (1) with at least one discontinuous window (2), to a method for the preparation thereof, and to the use thereof.
The barrier packaging material (1) of the invention comprises
- a paper (3) comprising at least one discontinuous window (2), said paper (3) having a front side and a back side;
- a layer of a heat-sealed material (4) at least on the back side of said paper (3); and
- a transparent or semi-transparent barrier layer (5) laminated to the paper (3) through said layer of heat-sealed material (4).
The method for preparing the barrier packaging material (1) of the invention comprises
i) providing a heat-sealable paper, wherein said paper has a front side and a back side and heat-sealable material (4) is provided at least the back side of said paper (3);
ii) removing at least one discontinuous window (2) from the paper as obtained in step i); and
iii) laminating the paper as obtained in step ii) on the back side with a barrier layer (5) while applying heat and pressure.

## Description

The invention is directed to a barrier packaging material with at least one discontinuous window, to a method for the preparation thereof, and to the use thereof.

The packaging of products, such as food, often puts requirements to the packaging material used. It can be particularly advantageous if the packaging material can act as a barrier for certain substances, such as oxygen, water vapour, and/or lipids. Furthermore, can be desirable that the packaging material is a barrier against piercing of the product (for instance in case the packaged products are nuts). At the same time, it can be highly desirable, in particular for consumer products, to have a packaging in which the packaged product remains visible. Furthermore, there is a trend to have a paper-based packaging material, preferably a packaging material with a paper surface. Some effort has been done in realising a packaging material having the above combination of desirable properties.

NL-A-9 500 337 for instance describes a method and apparatus for the production of a vapour tight package. According to the method described in this application a paper strip is printed, then a window in cut from the paper strip, and a sealable plastic foil of transparent or semi-transparent material is laminated on the paper. In order to laminate the (sealable) plastic foil onto the paper, the paper or plastic foil is provided with a layer of liquid adhesive by means of a transfer roller. In order to avoid having the adhesive stick to the counter-roller, the adhesive has to be provided onto the paper in register, *i*.*e*. no adhesive should be applied at the locations of the window(s). This is very difficult to bring into practise, especially in view of possible drift of the paper on the roller.

Object of the invention is to overcome the difficulties faced in the prior art and provide a barrier packaging material that combines the above-mentioned desirable properties.

It has surprisingly been found that this object can be met by applying a layer of heat-sealable material to the paper in a stage prior to making the window in order to laminate the packaging paper.

Accordingly, in a first aspect the invention is directed to a barrier packaging material with at least one discontinuous window comprising
- a paper comprising at least one discontinuous window, said paper having a front side and a back side;
- a layer of a heat-sealed material at least on the back side of said paper; and
- a transparent or semi-transparent barrier layer laminated to the paper through said layer of heat-sealed material.

The barrier layer of this packaging material has excellent adhesion with the paper through the heat-sealed material. An important advantage of the present invention is that application of liquid adhesive for laminating the paper with the barrier layer can be omitted.

The barrier layer may form a barrier against compounds such as oxygen, water vapour, and/or lipids. It is possible that such compounds are barred from diffusing through the packaging material into the package and to the packaged product, but it is also possible that such compounds are barred from diffusing out of the package through the packaging material to the environment. Of course also combinations of such barrier functions are possible. Typically, the packaging material of the invention is suitable for the packaging of dry products. However, the packaging of wet products with the packaging material of the invention may also be envisaged.

It is preferred that the paper is laminated essentially completely with the barrier layer. In an embodiment at least 90 % of the surface area of the back side of the paper is laminated with the barrier layer, preferably 95 %, and even more preferably about 100 %. This assures that essentially the entire packaging material acts as a barrier and for example not just the region of the window.

The barrier layer can be a monolayer or a multilayer. It can thus comprise one or more layers. In an embodiment, the barrier layer comprises at least two layers.

The transparent or semi-transparent barrier layer can suitable comprise at least one layer comprising a barrier material such as PET (polyethylene terephthalate) including APET (amorphous polyethylene terephthalate), PBT (polybutylene terephthalate), PVC (polyvinyl chloride), OPP (oriented polypropylene) including BOPP (biaxially oriented polypropylene) and COPP (co-extruded oriented polypropylene), PE (polyethylene) including EVOH (ethylene-vinyl alcohol) coated PE and/or peelable PE, PP (polypropylene), PS (polysulphide), PA (polyamide), or other barrier materials. Also mixtures of these materials can suitably be used.

The transparent or semi-transparent barrier layer can suitably comprise at least one layer comprising a barrier packaging material such as PE (polyethylene) or PE-EVOH (polyethylene/ethylene-vinyl alcohol copolymer), or PVDC (polyvinyl dichloride copolymer). Also mixture of these barrier materials can suitably be used.

In an embodiment, the transparent or semi-transparent barrier comprise at least one multi-layer, such as PE/EVOH, PP/EVOH, PS/EVOH, PE/PA, PP/PA, PS/PA, PE/EVOH/PE, PE/EVOH/PS, PE/PA/PE, and PP/EVOH/PP.

In a preferred embodiment, the barrier packaging material of the invention has a barrier layer comprising a multilayer consisting of PET/PE/EVOH/PE, wherein the PET heat-sealed to the paper.

The order of layers in a barrier multilayer can be chosen such as desired. This order depends mainly on the application of the packaging material and on the type of packaging machine.

In addition to the barrier function, the barrier layer can further provide the paper with additional strength. Paper which is laminated with a barrier layer can for instance be more difficult to tear.

The at least one discontinuous window can have any size and shape, as long as it is not continuous in any direction. Thus, the at least one window can be circular, oval, rectangular, square, etc. It is also possible that the packaging material has multiple windows with different shapes. The term "discontinuous window" is meant to refer to a window that does not run continuously in the plane of the paper from one edge of the paper to another edge of the paper. The window may for instance be a distinct window which is surrounded in the two dimensions of the paper plane by paper. The window can also be a distinct window meeting an edge of the paper, without running continuously in the plane of the paper from the edge of the paper which it meets to another edge of the paper.

The heat-sealed material is described in more detail herein below with respect to the original heat-sealable material used for the preparation of the packaging material. Typically, when applying heat and pressure, the heat-sealable material forms cross-links, which are mainly responsible for the required adhesive properties. This yields a heat-sealed material, which is thus chemically different from the original heat-sealable material.

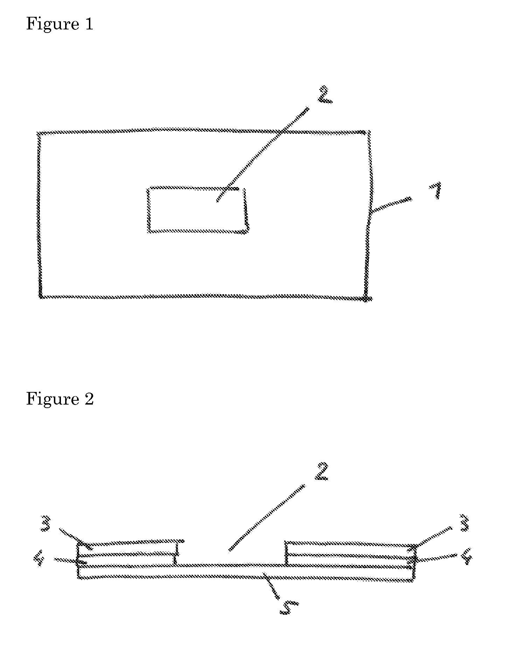

The barrier packaging material of the invention is schematically depicted in Figures 1 and 2. These Figures show an embodiment of the barrier packaging material of the invention having one discontinuous window.

Figure 1 is a top view of the barrier packaging material (1), having a discontinuous window (2).

Figure 2 is a cross section of the barrier packaging material shown in Figure 1, comprising a paper (3), a layer of heat-sealed material (4), and a barrier layer (5).

In a further aspect the invention is directed to a method for preparing the barrier packaging material of the invention. This method comprises
i) providing a heat-sealable paper, wherein said paper has a front side and a back side and a layer of heat-sealable material is provided at least on the back side of said paper;
ii) removing at least one discontinuous window from the paper as obtained in step i); and
iii) laminating the paper as obtained in step ii) on the back side with a barrier layer while applying heat and pressure.

The paper to be used in accordance with the invention can be any kind of paper. However, in terms of strength it is preferred that the paper has a weight of at least 20 g/m², preferably at least 30 g/m², more preferably at least 40 g/m². In terms of workability it is preferred that the paper has a weight of at most 100 g/m², preferably at most 90 g/m², more preferably at most 60 g/m².

The layer of heat-sealable material may be applied to the paper by conventional means, including off-line on a separate dedicated coating machine, in-line while printing the paper (*e*.*g*. on a roll-to-roll rotogravure press), or on a separate coating station which is coupled to the laminating machine (so-called combi coater/lamination machine). It is however also possible to use any commercially available heat-sealable paper. It is preferred that the heat-sealable material is provided on only one side of the paper, *i*.*e*. the back side.

In a preferred embodiment, a printable paper or a printed paper is used. The paper can for instance be printed prior to providing the heat-sealable material onto the paper, or alternatively after providing the heat-sealable material onto the paper. Any kind of printing process can be applied in accordance with the invention. In case a print is provided onto the paper it is preferred that the print is provided on the front side of the paper.

At least the back side the paper is provided with a layer of heat-sealable material. A wide variety of heat-sealable materials is available to the person skilled in the art for use in the invention. Also mixtures of heat-sealable materials can be used in accordance with the invention.

In a preferred embodiment, the heat-sealable material used for the barrier packaging material of the invention is a dispersion. More preferably, the heat-sealable material has a solids content of 30-50 wt.% based on the total weight of the heat-sealable material. If the solids content is high, then less water needs to be removed by drying.

Good results have been obtained using an aqueous dispersion of an EVA (ethylene vinyl acetate) copolymer.

The amount of heat-sealable material used can vary depending on the type of heat-sealable material which is used. Normally, the amount is at least 5 g/m² based on dry weight, preferably at least 8 g/m². Preferably, the amount of heat-sealable material does not exceed 16 g/m² based on dry weight, more preferably it does not exceed 14 g/m².

In a step thereafter, the windows are removed from the heat-sealable paper. Removal may suitably be done using a rotary die cutter or punching machine. Other suitable methods include (digital) laser cutting or punching. An important advantage of the method of the invention is that the barrier packaging material of the invention can be manufactured on a roll that can directly be supplied to customers. This in contrast to for example conventional folding paper boxes with discontinuous windows, which cannot be prepared on a roll. Moreover, in conventional folding paper boxes windows are made by gluing a transparent film onto the paper, wherein said transparent film has a size which is slightly larger than the window that is cut from the paper, thereby not providing full barrier coverage to the paper by means of the plastic film.

After the at least one window is removed from the heat-sealable paper (such as by cutting), the paper is laminated on the back side with the barrier layer. Lamination is carried out while applying heat and pressure. The heat and pressure activate the adhesive properties of the heat-sealable material. Thus, preferably lamination is carried out at a temperature and pressure at which the adhesive properties of the heat-sealable material are activated. As a consequence, the barrier layer is heat-sealed onto the paper and the heat-sealable material is transformed into heat-sealed material. The temperature at which the lamination is carried out depends on a number of factors, such as the type of heat-sealable material used, the thickness of the material through which the heat is applied, the amount of heat-sealable material provided on the paper, and the contact time of the laminate with the heat medium. Typically, the lamination temperature can be at least 100, preferably at least 110 °C. Normally, the lamination temperature does not exceed 200 °C, preferably it does not exceed 150 °C.

In an embodiment the lamination temperature is controlled by heating one or more of the heated nip/laminating roller sections at the laminating machine. This can for instance be done using a heating oil.

Besides heat, a pressure is applied during lamination, *i*.*e*. the barrier layer is pressed against the heat-sealable paper. Normally, conventional lamination processes are performed while applying a pressure and adhesive.

The barrier layer can typically have a thickness of at least 10 µm, preferably at least 50 µm, more preferably at least 60 µm. If the barrier layer is too thick, the barrier packaging material becomes less workable. Therefore, the thickness of the barrier layer is normally not more than 100 µm, preferably not more than 90 µm, more preferably not more than 80 µm.

The barrier packaging material of the invention can be used for packaging a wide range of products. It is very suitable for packaging food stuff. Preferably the barrier packaging material is used for packaging optionally grinded dry food products, such as nuts, coffee beans, tea leafs, confectionary, biscuits. The barrier packaging material may also be used as a covering laminate for a container, such as a box or a bowl, in order to package *e*.*g*. meat products.

The invention will now be illustrated by means of the following examples, which are not intended to limit the invention.

### Examples

A barrier packaging material with a discontinuous window according to the invention was prepared as follows.

A single sided coated kraft paper with a weight of 60 g/m² (Sappi, Algro Finess quality) with a heat-sealable layer was printed on a roll-to-roll rotogravure press for flexible packaging printing (Rotomec) using nitrocellulose ink (SunChemical). Windows were cut into the printed paper using a Helmert rotary die cutter. Thereafter, the kraft paper with windows was laminated in two runs with a 12 µm thick barrier layer of PET and PE-EVOH using a DCM duplex roll-to-roll solvent-free laminating machine, provided with an adhesive mix facility and thermal oil heater. During the first run of lamination (PET against the kraft paper), the temperature was kept at about 130 °C. During the second run of lamination (PE-EVOH against the kraft paper/PET laminate), the temperature was kept at about 55 °C. For the second lamination run a solvent free two component adhesive from Rohm & Haas was used.

## Claims

1. Barrier packaging material with at least one discontinuous window comprising
- a paper comprising at least one discontinuous window, said paper having a front side and a back side;
- a layer of a heat-sealed material at least on the back side of said paper; and
- a transparent or semi-transparent barrier layer laminated to the paper through said layer of heat-sealed material.

2. Barrier packaging material according to claim 1 or 2, wherein said barrier layer is a multilayer.

3. Barrier packaging material according to any one of the preceding claims, wherein said barrier layer forms a barrier against oxygen, water, and/or lipids.

4. Barrier packaging material according to any one of the preceding claims, wherein said barrier layer comprises at least one layer comprising one or more of the group consisting of PET (polyethylene terephthalate) including APET (amorphous polyethylene terephthalate), PBT (polybutylene terephthalate), PVC (polyvinyl chloride), OPP (oriented polypropylene) including BOPP (biaxially oriented polypropylene) and COPP (co-extruded oriented polypropylene), PE (polyethylene) including EVOH (ethylene-vinyl alcohol) coated PE and/or peelable PE, PP (polypropylene), PS (polysulphide), and PA (polyamide).

5. Barrier packaging material according to any one of claims 2-4, wherein said barrier layer comprises at least one layer comprising one or more of the group consisting of PE (polyethylene), PE-EVOH (polyethylene/ethylene-vinyl alcohol copolymer), and PVDC (polyvinyl dichloride copolymer).

6. Barrier packaging material according to any one of the preceding claims, wherein said paper is a printed paper or a printable paper.

7. Barrier packaging material according to any one of the preceding claims, wherein at least 90 % of the surface area of the back side of the paper is laminated with the barrier layer, preferably 95 %, even more preferably about 100 %.

8. Method for preparing a barrier packaging material according to any one of the preceding claims, comprising
i) providing a heat-sealable paper, wherein said paper has a front side and a back side and a layer of heat-sealable material is provided at least the back side of said paper;
ii) removing at least one discontinuous window from the paper as obtained in step i); and
iii) laminating the paper as obtained in step ii) on the back side with a barrier layer while applying heat and pressure.

9. Method according to claim 8, wherein the paper as obtained in step iii) is laminated with at least a further barrier layer.

10. Method according to claims 8 or 9, wherein the front side of said paper is printed.

11. Method according to any one of claims 8-10, wherein said at least one discontinuous window is removed by using a rotary die cutter or puncher, or an optionally digital laser cutter or puncher.

12. Method according to any one of claims 8-11, wherein said heat is a temperature of 100-200 °C, preferably 110-150 °C.

13. Method according to any one of claims 8-12, wherein said paper has a weight of 20-100 g/m², preferably 30-90 g/m², more preferably 40-60 g/m².

14. Method according to any one of claims 8-13, wherein said layer of heat-sealable material has a weight of 5-16 g/m², preferably 8-14 g/m².

15. Method according to any one of claims 8-14, wherein said barrier layer has a thickness of 10-100 µm, preferably 50-90 µm, more preferably 60-80 µm.

16. Method according to any one of claims 8-15, wherein steps ii) and iii) are carried out on a roll.

17. Use of a barrier packaging material according to any one of claims 1-7 for packaging food stuff, preferably optionally grinded dry food products, such as nuts, coffee beans, tea leafs, confectionary, and biscuits.

18. Use of a barrier packaging material according to any one of claims 1-7 as a covering laminate for a container, such as a box or a bowl.
